# EUROPEAN PATENT APPLICATION

(11) **EP 4 650 769 A1**
(43) Date of publication of application: **19.11.2025**
(21) Application number: 23916010.4
(22) Date of filing: 13.01.2023
(51) Int. Cl.: G01N 29/265, G01N 29/22, H02K 15/02

(54) **DEVICE FOR ULTRASONIC FLAW DETECTION IN ROTARY ELECTRIC MACHINE**

(71) Applicant: Mitsubishi Generator Co., Ltd., Kobe City, Hyogo 652-8555 (JP)
(72) Inventor: NAKANE Yusuke, Tokyo 100-8310 (JP)
(74) Representative: Witte, Weller & Partner Patentanwälte mbB
(86) International application number: PCT/JP2023/000714
(87) International publication number: WO 2024/150389

(57) **Abstract**

The present disclosure includes: a retention mechanism (4) insertable into a gap between a rotor (41) and a stator (31) of a rotary electric machine and allowing easy replacement and change of an ultrasonic probe (9); a three-dimensional drive mechanism (2) for following the curvature and gradient of a surface of an inspection object; elastic mechanisms (3) for adjusting a pressing force of the ultrasonic probe (9); and a support structure (5) for an inspector (51) to perform flaw detection operation. Fine adjustment of a pressing force of the ultrasonic probe (9) and scanning by sliding the ultrasonic probe (9) over the surface of the inspection object can be performed by the three-dimensional drive mechanism (2) causing the ultrasonic probe (9) to smoothly follow the curvature and gradient of the surface of the inspection object, whereby fine pressing force adjustment performed by a skilled inspector (51) can be reproduced.

## Description

### TECHNICAL FIELD

The present disclosure relates to a device for ultrasonic flaw detection in a rotary electric machine.

### BACKGROUND ART

Conventionally, in maintenance and checking of a rotary electric machine, the most common practice is to pull out a rotor from a stator, and, in this disassembled state, check a wedge portion, a retention ring portion, or the like. Such work for pulling out the rotor requires a long stoppage period and incurs a high cost.

Thus, a method for checking a rotary electric machine without pulling out a rotor from a stator is proposed. For example, Patent Document 1 discloses a probe integrated-type ultrasonic flaw detection device having an ultrasonic probe and a probe drive mechanism inside a body thereof, and an ultrasonic flaw detection method. In addition, Patent Document 2 discloses a checking robot operable from outside a rotary electric machine by a remote device.

### CITATION LIST

### PATENT DOCUMENT

Patent Document 1: Japanese Laid-Open Patent Publication No. 2018-132402
Patent Document 2: Japanese Laid-Open Patent Publication No. 2002-209363

### SUMMARY OF THE INVENTION

### PROBLEM TO BE SOLVED BY THE INVENTION

The flaw detection device disclosed in Patent Document 1 is a probe integrated-type ultrasonic flaw detection device, and the ultrasonic probe is connected to the probe drive mechanism and is provided inside the body. Therefore, it is not easy to change and replace the ultrasonic probe in accordance with an inspection object and a target defect. In addition, a pressing force of the ultrasonic probe against the inspection object is controlled by the probe drive mechanism, and thus, it is difficult to reproduce fine pressing force adjustment performed by a skilled inspector. Furthermore, since ultrasonic vibration emitted from the ultrasonic probe is propagated to the inspection object via a gel-like elastic member, the ultrasonic probe and the elastic member are adhered to each other, and thus it is impossible to reproduce scanning performed by a skilled inspector sliding the ultrasonic probe over the surface of the inspection object.

The checking robot disclosed in Patent Document 2 requires, other than a checking device composing a flaw detection mechanism, peripheral devices such as a travel device including a robot support mechanism such as a pantograph jack, a remote device for sending power and control signals to mechanism portions, and a transmission cable, and thus the scale of equipment required for checking and the scale of work for preparation and the like become great. In addition, since the remote device is generally installed outside the rotary electric machine, an inspector who operates the remote device outside the rotary electric machine and a worker who inserts, pulls out, and monitors the robot inside the rotary electric machine are needed, resulting in an inevitable increase in the number of workers. Furthermore, since the robot has complicated mechanisms and thus is composed of a large number of components, flaw detection feeling of an inspector is different from that in a manual ultrasonic flaw detection test. The inspector is required to have, other than knowledge and skills for the ultrasonic flaw detection test, specialized knowledge and skills regarding robot operation and foreign matter management in the rotary electric machine, and obtaining such knowledge and skills requires time and cost.

The present disclosure has been made to solve the above problem, and an object of the present disclosure is to provide a device for ultrasonic flaw detection in a rotary electric machine, the device being able to perform fine adjustment of a pressing force of an ultrasonic probe and scanning by sliding the ultrasonic probe over a surface of an inspection object, thus making it possible to reproduce fine pressing force adjustment performed by a skilled inspector, with a simple configuration requiring no peripheral devices.

### MEANS TO SOLVE THE PROBLEM

A device for ultrasonic flaw detection in a rotary electric machine according to the present disclosure includes: an upper frame connected to an end on one side of a rod-like support structure; a lower frame connected to the upper frame by a plurality of elastic mechanisms; a retention mechanism provided on a back surface of a surface to which the elastic mechanisms are connected, of the lower frame; an ultrasonic probe removably fixed to the retention mechanism; an ultrasonic flaw detector that is disposed on another side of the support structure and that controls an ultrasonic wave of the ultrasonic probe and analyzes a received reflected wave; and a three-dimensional drive mechanism that, when the ultrasonic probe is brought into close contact with a surface of an inspection object and the support structure is moved linearly, rotates the ultrasonic probe so as to follow a movement according to a shape of the surface of the inspection object in a direction other than a movement direction of the support structure.

### EFFECT OF THE INVENTION

The device for ultrasonic flaw detection in a rotary electric machine according to the present disclosure can perform fine adjustment of a pressing force of an ultrasonic probe and scanning by sliding the ultrasonic probe over a surface of an inspection object, by a three-dimensional drive mechanism causing the ultrasonic probe to smoothly follow the curvature and gradient of the surface of the inspection object, thus making it possible to reproduce fine pressing force adjustment performed by a skilled inspector, with a simple configuration requiring no peripheral devices.

### BRIEF DESCRIPTION OF THE DRAWINGS

[FIG. 1] FIG 1 illustrates an example of a device for ultrasonic flaw detection during execution of a test according to embodiment 1.
[FIG. 2] FIG. 2 is a plan view of the device for ultrasonic flaw detection according to embodiment 1.
[FIG. 3] FIG. 3 shows views as seen from the arrow A and the arrow B in FIG. 2, where (a) is a view as seen from the arrow A and (b) is a view as seen from the arrow B.
[FIG. 4] FIG. 4 shows the device for ultrasonic flaw detection when a cover is attached, according to embodiment 1.

### DESCRIPTION OF EMBODIMENTS

### Embodiment 1

Hereinafter, preferred embodiments of a device for ultrasonic flaw detection in a rotary electric machine according to the present disclosure will be described with reference to the drawings. It is noted that the same features and corresponding parts are denoted by the same reference characters, and the detailed description thereof will be omitted.

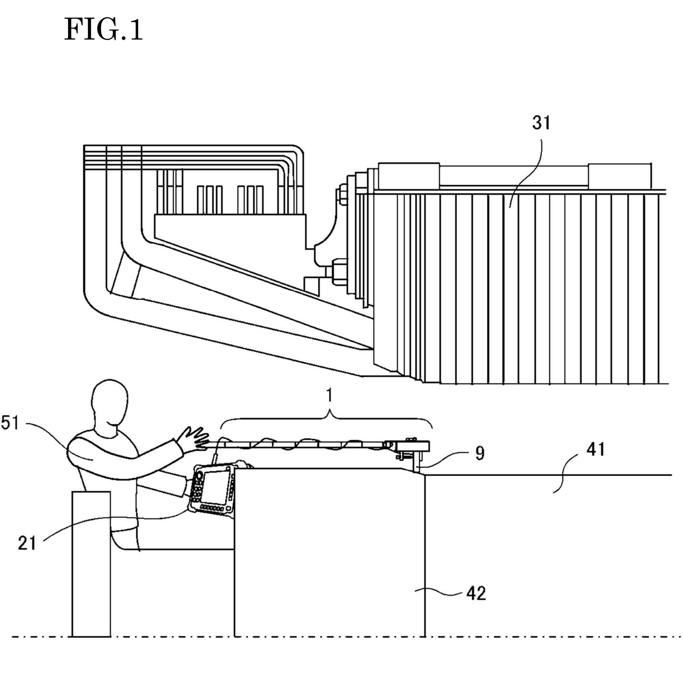

FIG. 1 is a schematic view showing one example during execution of an ultrasonic flaw detection test in a state in which a rotor and a stator of a rotary electric machine are assembled. When inspecting, for example, a fitted portion of a retention ring 42 to a rotor 41 without pulling out the rotor 41 from a stator 31, an inspector 51 approaches the vicinity of the end of the rotor 41 in the rotary electric machine and inserts a device 1 for ultrasonic flaw detection into a gap between the rotor 41 and the stator 31. A flaw detection result of an ultrasonic probe 9 attached to the distal end of the inserted device 1 for ultrasonic flaw detection is transmitted to an ultrasonic flaw detector 21, and the inspector 51 can perform scanning using the ultrasonic probe 9 while confirming the flaw detection result on a display provided to the ultrasonic flaw detector.

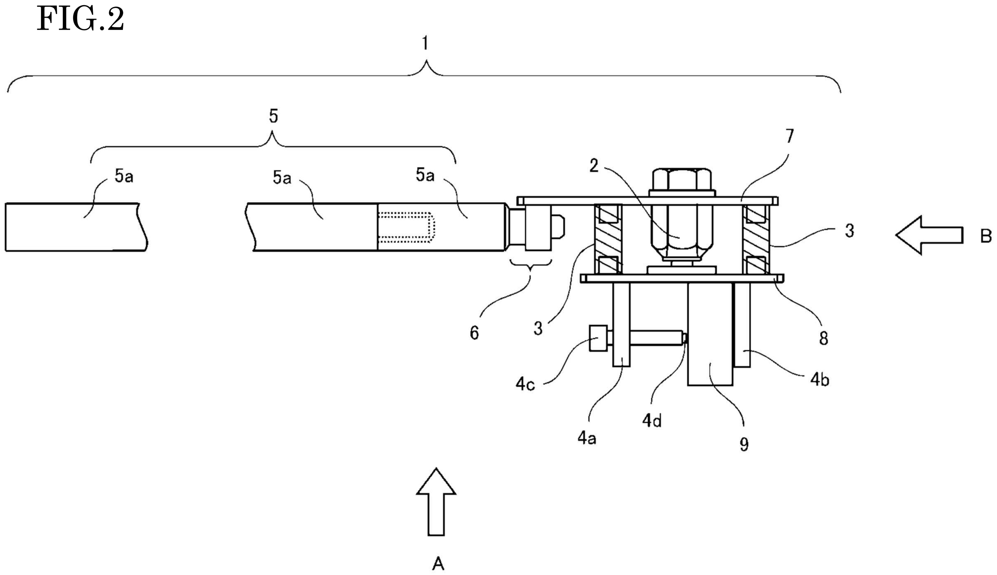

FIG. 2 is a side view showing a schematic configuration of the device 1 for ultrasonic flaw detection. The device is composed of a retention mechanism 4 (a general term for 4a to 4d) for retaining the ultrasonic probe 9, a three-dimensional drive mechanism 2 and elastic mechanisms 3 for controlling the direction and a pressing force of the ultrasonic probe 9, and a support mechanism 5 for the inspector 51 to operate the ultrasonic probe 9 retained by the retention mechanism 4. Hereinafter, each component will be described.

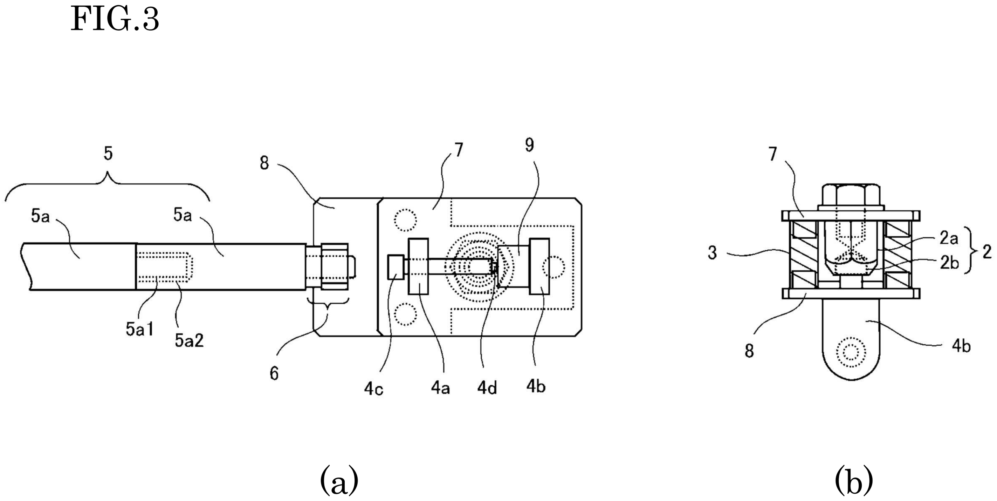

The support mechanism 5 has a rod-like shape, supports the ultrasonic probe 9 at one end, and has a holding portion at the other end so as to allow the inspector 51 to perform scanning by holding the support mechanism. In order to perform scanning by bringing the ultrasonic probe 9 into close contact with a surface of an inspection object, the support mechanism 5 does not directly support the ultrasonic probe 9, but is fixed to an upper frame 7 by means of a connection portion 6 attached to the one end. The upper frame 7 is connected to a lower frame 8 via the elastic mechanisms 3 and the three-dimensional drive mechanism 2, described later. The ultrasonic probe 9 is removably attached via the retention mechanism 4 provided on a surface (back surface) of the lower frame 8 opposite to a surface facing the upper frame 7. In addition, the support mechanism 5 is required not to be easily broken during retention mechanism flaw detection. For example, as shown in FIG. 3(a), the support mechanism 5 may be formed as a rod type in which a projection 5a1 is formed at an end of one unit 5a, a recess 5a2 is formed at an end of another unit 5a opposed to the one unit 5a, and the units 5a can be connected and disassembled to and from each other. With such a configuration, the support mechanism 5 can be adjusted to a required length according to an inspection position. By using a screw for connection between the units 5a, unintentional disassembly can be prevented during flaw detection, and sufficient strength can be obtained. In addition, a grip made of a material such as rubber may be provided to the support mechanism 5 in order for the inspector 51 to easily operate by holding the same by the hands. Adopting the rod type which does not have a complicated mechanism as the support mechanism 5 eliminates requirement for special education and skill management of the inspector 51.

As shown in FIG. 2, for example, the retention mechanism 4 may be a screw-type retention mechanism composed of retention plates 4a, 4b, and a screw 4c. Specifically, the retention plate 4a with a screw hole and the retention plate 4b without a screw hole are provided on the lower frame 8 so as to face each other, and the screw 4c is screwed into the retention plate 4a. The ultrasonic probe 9 is held between the screw 4c and the retention plate 4b. It is noted that a slip stopper 4d may be attached to the tip of the screw to prevent the ultrasonic probe 9 from slipping and rotating. Adopting the screw-type retention mechanism makes a force of retaining the ultrasonic probe 9 unlikely to loosen during an ultrasonic flaw detection test, and prevents the ultrasonic probe 9 from falling during flaw detection. Since the configuration is significantly simple, the external dimensions of the retention mechanism 4 can be made small, thus enabling easy insertion into a small space between the rotor 41 and the stator 31. Furthermore, the ultrasonic probe 9, which is changed and replaced in accordance with a flaw detection target, can be retained regardless of the shape of the ultrasonic probe 9.

It is noted that, instead of the screw-type retention mechanism, a clamp-type retention mechanism in which the ultrasonic probe 9 is clamped by a toggle-type retention mechanism may be adopted. However, in this case, since the structure is complicated as compared to the screw-type retention mechanism, the external dimensions of the retention mechanism 4 are large. In order to solve such a problem, the height dimension of the retention mechanism 4 may be reduced by a configuration of clamping not in the vertical direction but in a horizontal direction relative to the flaw detection surface.

The ultrasonic probe 9 retained by the retention mechanism 4 is needed to have an arbitrary angle according to the curvature and gradient of the surface of the inspection object in order to perform smooth following over the surface of the inspection object (an outer peripheral surface of the fitted portion of the retention ring 42 to the rotor 41, in the present embodiment). This is achieved by having such a configuration that the lower frame 8 on which the retention mechanism 4 is provided is rotatable with respect to the upper frame 7. Meanwhile, since a linear movement in the front-rear and right-left directions can be operated via the support mechanism 5 by the inspector 51 moving his or her hand, a movement in a horizontal direction which is the same direction as the movement of the support mechanism 5 of the device 1 for ultrasonic flaw detection itself might become an obstacle during flaw detection. For these reasons, the three-dimensional drive mechanism 2 may have a swivel structure as shown in FIG. 3(b). Specifically, as in FIG. 3(b), the three-dimensional drive mechanism 2 may have such a structure that the lower frame 8 is connected to a member 2b rotatably retained in a support structure 2a supported by the upper frame 7, and a rotational motion of the lower frame 8 is allowed so that the lower frame 8 can have an arbitrary angle with respect to the upper frame 7, whereby the ultrasonic probe 9 retained by the retention mechanism 4 provided on the back surface of the lower frame 8 can be freely rotated.

As shown in FIG. 3, between the upper frame 7 and the lower frame 8, the elastic mechanisms 3 are connected at three locations around the three-dimensional drive mechanism 2 in order to inhibit an unintentional movement in the rotation direction of the three-dimensional drive mechanism 2 and perform orientation control on the ultrasonic probe 9, while keeping the pressing force of the ultrasonic probe 9 constant and uniform so as to make the orientation control easy. A movement of the three-dimensional drive mechanism 2 in the rotation direction about a rotational axis vertically passing through the upper frame 7 and the lower frame 8 is inhibited by the elastic mechanisms 3 at the three locations. For the elastic mechanisms 3, a variety of members such as rubber, a resin, and various kinds of polymer materials can be used depending on a required pressing force and a target inspection object. In FIG. 2, in order to explain a basic aspect, a spring is used. The spring is engaged with fasteners formed at the upper frame 7 and the lower frame 8. In addition, the locations of the connected elastic mechanisms 3 are not limited to the three locations.

Since the flaw detection is performed in accordance with the curvature and gradient of the surface of the inspection object, the three-dimensional drive mechanism 2 and the elastic mechanisms 3 are required. However, if the curvature and gradient of the surface of the target inspection object are small, the elastic force of the elastic mechanisms 3 alone is sometimes enough to follow over the surface. In this case, the three-dimensional drive mechanism 2 need not be provided and the upper frame 7 and the lower frame 8 may be connected only by means of the elastic mechanisms 3. With such a configuration, the external dimensions of the device 1 for ultrasonic flaw detection can be reduced, thus enabling insertion into a smaller space.

The ultrasonic probe 9 includes an ultrasonic vibrator therein, propagates ultrasonic vibration of the ultrasonic vibrator from the surface to the inside of the inspection object, and evaluates a flaw existing in the inspection object on the basis of the time until a reflected wave is returned and the intensity of the reflected wave. A signal line of a transmission signal for vibrating the ultrasonic vibrator, a signal line of a received reflected wave signal, a signal line for controlling the ultrasonic vibrator, and the like are connected to the outer periphery of the ultrasonic probe 9, and these signal lines are connected to the ultrasonic flaw detector 21 operated by the inspector 51.

The ultrasonic flaw detector 21 outputs a control signal for controlling the frequency of the ultrasonic vibrator in the ultrasonic probe 9, and receives the reflected wave signal of the ultrasonic probe 9, to thereby analyze the state of a flaw in the inspection target and display the result on a display so as to be visually recognizable by the inspector 51. The ultrasonic flaw detector 21 includes a processor and a storage device therein, and the storage device is provided with a volatile storage device such as a random access memory and a nonvolatile auxiliary storage device such as a flash memory. The processor executes a program inputted from the storage device to analyze the state of the flaw in the inspection target by, for example, frequency control on the ultrasonic probe 9 or the reflected wave. In this case, the program is inputted to the processor from the auxiliary storage instrument via the volatile storage instrument. In addition, the processor may output data such as an analysis result to the volatile storage device of the storage device, or may store the data in the auxiliary storage device via the volatile storage device.

The action of the device 1 for ultrasonic flaw detection configured as described above will be described. The inspector 51 operates the device 1 for ultrasonic flaw detection via the support mechanism 5. Although the support mechanism 5 is required to have a sufficient length to reach a flaw detection site, since a space where work is carried out in the rotary electric machine is small and limited, operability is deteriorated if the length is unnecessarily long. Therefore, in accordance with the distance to the flaw detection site, the units 5a are separated or connected to adjust the length of the support mechanism 5, and thereafter, scanning is started. At the start of the scanning, the inspector 51 manually moves the device 1 for ultrasonic flaw detection linearly over the surface of the inspection object to reach a desired flaw detection site. Thus, the movement is within the range in which the distal end of the support mechanism 5 can be visually recognized by the inspector 51. Then, the ultrasonic probe 9 attached to the distal end of the device 1 for ultrasonic flaw detection is brought into close contact with the flaw detection range, i.e., the outer peripheral surface of the fitted portion of the retention ring 42 to the rotor 41. Thereafter, while operating the ultrasonic flaw detector 21 attached to the support mechanism 5 in the hands of the inspector 51 and causing a set ultrasonic wave to be emitted from the ultrasonic probe 9, the inspector 51 linearly moves his or her hand holding the support mechanism 5 in the front-rear and right-left directions, thereby linearly moving the support mechanism 5 in the front-rear and right-left directions, so that the ultrasonic probe 9 attached to the distal end of the support mechanism 5 is moved over the inspection object in the same direction as the movement direction of the support mechanism 5. To prevent release of the state of being in close contact with the surface of the inspection object during scanning, the ultrasonic probe 9 is rotationally moved in accordance with the curvature and gradient of the surface of the inspection object by the three-dimensional drive mechanism 2, so as to follow a movement in a direction other than the linear direction. Then, while keeping the pressing force of the ultrasonic probe 9 constant and uniform by the elastic mechanisms 3, the ultrasonic probe 9 is moved along the surface of the inspection object. The reflected wave of the ultrasonic probe 9 is converted into an electrical signal and transmitted from the ultrasonic probe 9 to the ultrasonic flaw detector 21, whereby the state of the flaw is detected on the basis of the electrical signal of the reflected wave received by the ultrasonic flaw detector 21.

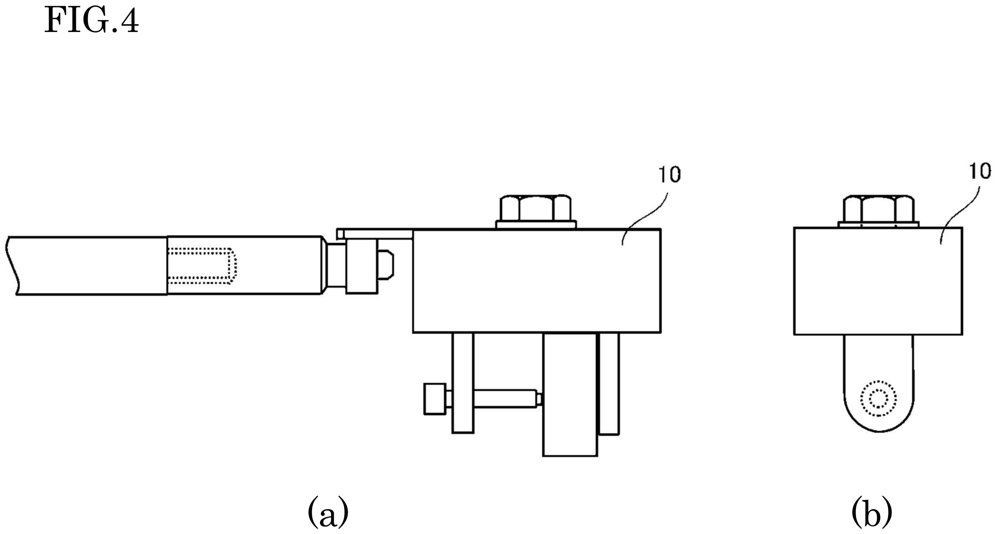

FIG. 4 is a side view showing a schematic configuration of the device 1 for ultrasonic flaw detection in FIG. 2 when a cover 10 is attached thereto. For the purpose of foreign matter management in the rotary electric machine, the cover 10 is attached so as to cover the three-dimensional drive mechanism 2 and the elastic mechanisms 3 having a large number of components and connection portions. In order not to impair the functions of the three-dimensional drive mechanism 2 and the elastic mechanisms 3, a stretchable material such as rubber or a resin, or a material having a stretchable structure such as bellows may be used as a cover material.

With the configurations as described above, the device 1 for ultrasonic flaw detection has effects as follows:
(1) An ultrasonic flaw detection test can be carried out outside a rotary electric machine in a visually recognizable range near the rotary electric machine owing to the configuration of allowing insertion into a small space such as a gap between a rotor and a stator;
(2) It is easy to change and replace an ultrasonic probe in accordance with an inspection object and a target defect;
(3) While having simple mechanisms, fine pressing force adjustment of the ultrasonic probe and scanning by sliding the ultrasonic probe over the surface of the inspection object can be performed, thus making it possible to reproduce fine pressing force adjustment performed by a skilled inspector;
(4) Peripheral devices are not necessary, and thus it is possible to reduce the equipment required for checking, work for preparation and the like, and the number of workers; and
(5) Since the flaw detection feeling is close to that in a manually performed ultrasonic flaw detection test and mechanisms are simple, requirement for specialized knowledge and skills for operating an inspection device can be eliminated.

Although the disclosure is described above in terms of an exemplary embodiment, it should be understood that the various features, aspects, and functionality described in the embodiment are not limited in their applicability to the particular embodiment with which they are described, but instead can be applied alone or in various combinations to the embodiment of the disclosure.

It is therefore understood that numerous modifications which have not been exemplified can be devised without departing from the scope of the present disclosure. For example, at least one of the constituent components may be modified, added, or eliminated.

### DESCRIPTION OF THE REFERENCE CHARACTERS

- 1: device for ultrasonic flaw detection
- 2: three-dimensional drive mechanism
- 3: elastic mechanism
- 4: retention mechanism
- 5: support mechanism
- 6: connection portion
- 7: upper frame
- 8: lower frame
- 9: ultrasonic probe
- 10: cover

## Claims

1. A device for ultrasonic flaw detection in a rotary electric machine, the device comprising:
an upper frame connected to an end on one side of a rod-like support structure;
a lower frame connected to the upper frame by a plurality of elastic mechanisms;
a retention mechanism provided on a back surface of a surface to which the elastic mechanisms are connected, of the lower frame;
an ultrasonic probe removably fixed to the retention mechanism;
an ultrasonic flaw detector that is disposed on another side of the support structure and that controls an ultrasonic wave of the ultrasonic probe and analyzes a received reflected wave; and
a three-dimensional drive mechanism that, when the ultrasonic probe is brought into close contact with a surface of an inspection object and the support structure is moved linearly, rotates the ultrasonic probe so as to follow a movement according to a shape of the surface of the inspection object in a direction other than a movement direction of the support structure.

2. The device for ultrasonic flaw detection in a rotary electric machine according to claim 1, wherein the three-dimensional drive mechanism has a swivel structure composed of a support body fixed to the upper frame and a member having one end rotatably and loosely fitted to the support body and another end fixed to the lower frame.

3. The device for ultrasonic flaw detection in a rotary electric machine according to claim 2, wherein
the three-dimensional drive mechanism is disposed to be surrounded by the plurality of elastic mechanisms, and
a movement of the three-dimensional drive mechanism in a rotation direction about a rotational axis vertically passing through the upper frame and the lower frame is inhibited by the plurality of elastic mechanisms.

4. The device for ultrasonic flaw detection in a rotary electric machine according to any one of claims 1 to 3, wherein the retention mechanism has such a structure that a first retention plate with a screw hole and a second retention plate without a screw hole are provided on the lower frame so as to face each other with a gap therebetween, and the ultrasonic probe is held between the second retention plate and a screw screwed into the first retention plate.

5. The device for ultrasonic flaw detection in a rotary electric machine according to any one of claims 1 to 4, wherein the upper frame, the lower frame, the three-dimensional drive mechanism, and the elastic mechanisms are covered with a cover.

6. The device for ultrasonic flaw detection in a rotary electric machine according to any one of claims 1 to 5, wherein the support structure is configured to be adjustable in length according to a flaw detection position of the inspection object through separation and connection of a plurality of unit members.
